# EUROPÄISCHE PATENTSCHRIFT

(11) **EP 0 667 988 B1**
(45) Veröffentlichungstag und Bekanntmachung des Hinweises auf die Patenterteilung: **01.05.1996**
(21) Anmeldenummer: 93923537.0
(22) Anmeldetag: 22.10.1993
(51) Int. Cl.: H02K 9/08, H02K 9/26

(54) **AUSTRAGUNG VON WASSERSTOFF AUS EINER MIT WASSERSTOFF GEFÜLLTEN ELEKTRISCHEN MASCHINE**
PROCESS FOR REMOVING HYDROGEN FROM A HYDROGEN-FILLED ELECTRIC MACHINE
EXTRACTION D'HYDROGENE D'UNE MACHINE ELECTRIQUE REMPLIE D'HYDROGENE

(30) Priorität: 04.11.1992 EP 92118869
(43) Veröffentlichungstag der Anmeldung: 23.08.1995
(73) Patentinhaber: SIEMENS AKTIENGESELLSCHAFT, D-80333 München (DE)
(72) Erfinder: REHM, Helmut, D-46119 Oberhausen (DE); WELLER, Klaus, D-46562 Voerde (DE); SCHÖNFELD, Peter, D-45259 Essen (DE)
(86) Internationale Anmeldenummer: EP9302933
(87) Internationale Veröffentlichungsnummer: WO9410739

(56) Entgegenhaltungen:
- PATENT ABSTRACTS OF JAPAN vol. 2, no. 150 (E-78)(9597) 15. Dezember 1978 & JP,A,53 118 705 (MITSUBISHI) 17. Oktober 1978
- PATENT ABSTRACTS OF JAPAN vol. 14, no. 120 (E-899)(4063) 6. März 1990 & JP,A,01 315 238 (MITSUI) 20. Dezember 1989
- PATENT ABSTRACTS OF JAPAN vol. 11, no. 161 (E-509)(2608) 23. Mai 1987 & JP,A,61 293 132 (TOSHIBA) 23. Dezember 1986
- PATENT ABSTRACTS OF JAPAN vol. 11, no. 161 (E-509)(2608) 23. Mai 1987 & JP,A,61 293 133 (TOSHIBA) 23. Dezember 1986
- PATENT ABSTRACTS OF JAPAN vol. 11, no. 161 (E-509)(2608) 23. Mai 1987 & JP,A,61 293 131 (TOSHIBA) 23. Dezember 1986
- PATENT ABSTRACTS OF JAPAN vol. 10, no. 217 (E-423)(2273) 29. Juli 1986 & JP,A,61 054 842 (HITACHI) 19. März 1986
- PATENT ABSTRACTS OF JAPAN vol. 9, no. 212 (E-339)(1935) 29. August 1985 & JP,A,60 074 944 (MITSUBISHI) 27. April 1985
- PATENT ABSTRACTS OF JAPAN vol. 2, no. 150 (E-78)(9597) 15. Dezember 1978 & JP,A,53 118 705
- PATENT ABSTRACTS OF JAPAN vol. 14, no. 120 (E-899)(4063) 6. März 1990 & JP,A,01 315 238
- PATENT ABSTRACTS OF JAPAN vol. 11, no. 161 (E-509)(2608) 23. Mai 1987 & JP,A,61 293 132
- PATENT ABSTRACTS OF JAPAN vol. 11, no. 161 (E-509)(2608) 23. Mai 1987 & JP,A,61 293 133
- PATENT ABSTRACTS OF JAPAN vol. 11, no. 161 (E-509)(2608) 23. Mai 1987 & JP,A,61 293 131
- PATENT ABSTRACTS OF JAPAN vol. 10, no. 217 (E-423)(2273) 29. Juli 1986 & JP,A,61 054 842
- PATENT ABSTRACTS OF JAPAN vol. 9, no. 212 (E-339)(1935) 29. August 1985 & JP,A,60 074 944 (

## Beschreibung

Die Erfindung betrifft ein Verfahren zur Austragung von Wasserstoff aus einer mit Wasserstoff gefüllten elektrischen Maschine und Eintragung des Wasserstoffs in einen Festkörperspeicher, eine Einrichtung zu seiner Durchführung sowie die Verwendung dieser Einrichtung.

Zur Kühlung bestimmter Arten elektrischer Maschinen, insbesondere dynamoelektrischer Großmaschinen wie Turbogeneratoren, wird Wasserstoffgas, ggf. in Verbindung mit einem flüssigen Kühlmittel wie Wasser oder Öl, eingesetzt. Elektrische Maschinen, für die dies bevorzugtermaßen in Frage kommt, sind Turbogeneratoren im Leistungsbereich zwischen 200 MVA und 1000 MVA. Auch bei Turbogeneratoren mit Leistungen oberhalb von 1000 MVA findet Wasserstoffgas als ergänzendes Kühlmittel zu Wasser, welches als Hauptkühlmittel verwendet wird, Einsatz. Die in einem mit Wasserstoff gefüllten Turbogenerator gespeicherten Mengen an Wasserstoff belaufen sich auf Mengen zwischen 100 und 1000 Nm³, worunter das Volumen des Wasserstoffs bei Normaldruck und Normaltemperatur zu verstehen ist.

Zur Entfernung des Wasserstoffs aus einer elektrischen Maschine ist bisher in der Regel das Ablassen in die Umgebung erwogen worden. Hieraus ergibt sich ein durchaus nennenswerter Kostenfaktor, da in jedem Fall die Entfernung des Wasserstoffs aus der elektrischen Maschine gleichbedeutend ist mit dessen vollständigem Verlust. Abgesehen von den für die Neubeschaffung erforderlichen Kosten kann das Ablassen des Wasserstoffs in die Umgebung auf sicherheitstechnische Bedenken stoßen, insbesondere im Hinblick auf Szenarien, die einen Brand in der Umgebung der elektrischen Maschine voraussetzen. Für ein soiches Szenario ist für eine mit Wasserstoff gefüllte dynamoelektrische Großmaschine eine Möglichkeit vorzusehen, den Wasserstoff innerhalb einer hinreichend kurzen Zeitspanne, welche typisch etwa 10 Min. beträgt, aus der Maschine auszutragen; mit der kurzfristigen Austragung des Wasserstoffs soll allerdings kein zusätzliches Risiko, insbesondere kein Explosionsrisiko, verbunden sein. Die bekannten Maßnahmen schließen zwar ein Explosionsrisiko an der Maschine selbst weitestgehend aus, indem der Wasserstoff in der Maschine durch ein Inertgas, insbesondere Kohlendioxid, verdünnt und schließlich verdrängt wird; die Frage, in welcher Weise der aus der Maschine ausgetragene Wasserstoff weitestgehend risikofrei beseitigt werden könnte, ist bisher jedoch nicht umfassend beantwortet worden.

Ein Verfahren zur Austragung von Wasserstoff aus einer mit Wasserstoff gefüllten elektrischen Maschine und Eintragung des Wasserstoffs in einen Festkörperspeicher geht hervor aus der JP-A-1-315238, vergleiche Patent Abstracts of Japan, Band 14, Nr. 120 (E-899) (4063). Die Austragung des Wasserstoffs aus der elektrischen Maschine erfolgt in der Weise, daß der Festkörperspeicher, der mit der Maschine verbunden ist, abgekühlt wird. Nach der Austragung des Wasserstoffs kann die elektrische Maschine mit einem Inertgas wie Stickstoff oder Kohlendioxid gefüllt werden. Dieses Inertgas ist vor einer erneuten Eintragung von Wasserstoff durch Absaugen zu entfernen. Nach Entfernung des Inertgases wird der Wasserstoff aus dem Festkörperspeicher wieder in die Maschine eingetragen, indem der Festkörperspeicher wiederum mit der Maschine verbunden und erwärmt wird. Die Leistungsfähigkeit des Verfahrens wird beeinträchtigt dadurch, daß der Druck in der elektrischen Maschine bei der Austragung des Wasserstoffs stetig sinkt und letztendlich keine vollständige Entfernung des Wasserstoffs aus der Maschine erlaubt. Gleiches gilt für die Beseitigung des Inertgases, woraus sich eine Verunreinigung des Wasserstoffs in der Maschine ergeben kann, was zu einer Beeinträchtigung der Kühlwirkung führen kann. Die Einschränkung der Wirksamkeit des bekannten Verfahrens stellt auch dessen Eignung zur Austragung des Wasserstoffs im Rahmen eines Störfalls in Frage.

Ausgehend von den geschilderten Problemen liegt der Erfindung die Aufgabe zugrunde, ein Verfahren zur Austragung von Wasserstoff aus einer mit Wasserstoff gefüllten elektrischen Maschine und Eintragung des Wasserstoffs in einen Festkörperspeicher anzugeben, welches die mit dem Transport des Wasserstoffs verbundenen Probleme weitgehend ausschaltet und neben einer schnellen Entleerung der elektrischen Maschine eine möglichst sichere Aufbewahrung des aus der Maschine ausgetragenen Wasserstoffs erlaubt. Darüber hinaus soll eine entsprechende Einrichtung zu seiner Durchführung und die Verwendung einer solchen Einrichtung angegeben werden.

Zur Lösung dieser Aufgabe angegeben wird ein Verfahren zur Austragung von Wasserstoff aus einer mit Wasserstoff gefüllten elektrischen Maschine und Eintragung des Wasserstoffs in einen Festkörperspeicher, bei dem
a) ein Inertgas in die Maschine eingeleitet und mit dem Wasserstoff vermischt wird,
b) das sich ergebende Gasgemisch durch den Festkörperspeicher hindurchgesaugt wird, wobei der Wasserstoff in dem Festkörperspeicher gebunden wird, und
c) das Inertgas aus dem Festkörperspeicher getrennt abgeführt wird.

Erfindungsgemäß wird der gasförmige Wasserstoff aus einer elektrischen Maschine nicht einfach als Gas abgeleitet, was unter Vermeidung des vollständigen Verlustes dieses Wasserstoffes nicht möglich wäre, sondern der Wasserstoff wird von einer Festkörpermatrix aufgenommen. Die Erfindung macht dabei vorteilhaften Gebrauch von den eigenschaften der inzwischen zur Speicherung von Wasserstoff verfügbaren Festkörperspeicher. Derartige Festkörperspeicher sind beispielsweise beschrieben in "Ullmanns Encyklopädie der technischen Chemie", Verlag Chemie, Weinheim 1983, Band 24, Seiten 243ff. An Festkörperspeichern stehen zur Verfügung Adsorptionsspeicher, die zur Speicherung des Wasserstoffs einen Oberflächeneffekt ausnutzen, sowie Absorptionsspeicher, bei denen die Speicherung des Wasserstoffs im Inneren eines Festkörpers erfolgt. Je nach Ausführung wird der Wasserstoff in einem Absorptionsspeicher in atomarer Form gespeichert, was beispielsweise in einem Palladium-Festkörper der Fall ist, oder er geht unter Bildung eines Hydrids eine chemische Bindung mit dem Festkörper ein. Ein Absorptionsspeicher, in dem der Wasserstoff unter Hydridbildung chemisch reagiert, wird als "Hydridspeicher" bezeichnet. Hydridspeicher enthalten bestimmte Metalllegierungen, insbesondere Metallegierungen, welche Titan, Zirkon, Vanadium, Eisen, Chrom oder Mangan, ggf. auch mehrere dieser Elemente, enthalten.

Für eine möglichst vollständige Austragung des Wasserstoffs aus der Maschine wird ein Strom eines Inertgases durch die Maschine und durch den Festkörperspeicher geführt, um den Wasserstoff aus der Maschine auszuspülen. Dabei kann der Wasserstoff in der Maschine weitgehend vollständig durch das Inertgas ersetzt werden. Als Inertgas kommt vorteilhafterweise ein Gas in Frage, welches keinen Sauerstoff enthält; besonders günstig ist es, reinen Stickstoff zu verwenden. Letztere Maßnahme ist von besonderer Bedeutung im Zusammenhang mit einem Hydridspeicher, da ein Sauerstoff enthaltendes Gas die Funktion eines Hydridspeichers beeinträchtigen kann.

Erfindungsgemäß wird eine unzuträgliche Absenkung des Drucks in der elektrischen Maschine vermieden. Der Strom des Inertgases nimmt den Wasserstoff in der elektrischen Maschine mit und ersetzt ihn allmählich, wobei ein hinreichend hoher Druck in der elektrischen Maschine, und damit ein in jedem Falle ausreichend hoher Massenstrom für den Transport des Wasserstoffs, gewährleistet bleibt. Es ist nicht mehr erforderlich, die Maschine zur Aus- oder Eintragung von Wasserstoff zu evakuieren, was besondere Vakuumpumpen erfordert und unter Umständen die Gefahr des Ausgasens von Bauteilen im Inneren der elektrischen Maschine mit sich bringen kann. In diesem Sinne kommt das erfindungsgemäße Verfahren auch der Reinerhaltung des Wasserstoffs in der elektrischen Maschine zugute.

Ein besonderer Vorteil des Verfahrens liegt darin, daß der Wasserstoff in dem Festkörperspeicher sicher von der Umwelt abgeschirmt ist und insbesondere von Sauerstoff ferngehalten werden kann. Dies gilt in weitgehendem Umfang selbst dann, wenn der Hydridspeicher bei einem Brand oder dergleichen der Hitze ausgesetzt wird. In einem solchen Fall kann zwar die Bindung des Wasserstoffs in dem Festkörperspeicher beeinträchtigt werden, wobei sich in dem Festkörperspeicher ein Druck aufbaut; dieser Druckaufbau läuft jedoch angesichts der üblicherweise notwendigen relativ großen Masse des Festkörperspeichers relativ langsam ab, so daß auf alle Fälle eine über einen relativ langen Zeitraum erstreckte, stetige Abgabe von Wasserstoffgas in die Umgebung möglich ist. Hierfür sind allenfalls Leitungen mit kleinen Querschnitten erforderlich; solche Leitungen sind auf alle Fälle relativ einfach abschirmbar und kühlbar, so daß in allen denkbaren Fällen eine hohe Sicherheit gewahrt bleibt.

Vorteilhaft ist es, den Festkörperspeicher für das Eintragen des Wasserstoffs zu kühlen, da die Kühlung des Festkörperspeichers die Speicherung des Wasserstoffs begünstigt. Besonders vorteilhaft ist es, die Kühlung so weit zu treiben, daß in dem Festkörperspeicher ein Unterdruck erzeugt wird, durch den der Wasserstoff aus der Maschine gesaugt wird. Letzteres ist besonders wichtig im Zusammenhang mit Hydridspeichern, mit welchen selbst bei vergleichsweise mäßigen Kühlleistungen hohe Unterdrucke erzielbar sind. Eventuell kann sogar auf den Einsatz von Pumpen zur Austragung des Wasserstoffs verzichtet werden, abgesehen von Pumpen zur Beseitigung anderer Gase als Wasserstoff. Je nach Ausführung des Festkörperspeichers und je nach den konkret zu stellenden Anforderungen, insbesondere in einem Notfall, kann die Kühlung dadurch erfolgen, daß der Festkörperspeicher mit flüssigem Stickstoff oder mit Kohlensäureschnee überschüttet wird. Eine solche Maßnahme ist besonders im Brandfall wichtig, da sie gleichzeitig zur Verdrängung von Sauerstoff oder brennbaren Gasen aus der Umgebung des Festkörperspeichers, ggf. auch aus der Umgebung der elektrischen Maschine, beitragen kann.

In aller Regel ist es allerdings ausreichend, die Abkühlung des Festkörperspeichers zur Austragung des Wasserstoffs mit üblichem kaltem Leitungswasser, dessen Temperatur in der Regel bei 10 °C liegt, durchzuführen. Zur Eintragung des Wasserstoffs in die elektrische Maschine reicht in aller Regel eine Beheizung mittels Warmwasser aus einer üblichen Warmwasseranlage, das heißt mit Wasser bei einer Temperatur von etwa 60 °C, aus.

Das Verfahren findet im besonderen Anwendung zur Austragung von Wasserstoff aus einer dynamoelektrischen Großmaschine, insbesondere aus einem Turbogenerator.

Die erfindungsgemäße Einrichtung zur Austragung von Wasserstoff aus einer mit Wasserstoff gefüllten elektrischen Maschine und zur Eintragung des Wasserstoffs in einen Festkörperspeicher ist ausgezeichnet durch
a) Mittel zur Einleitung des Inertgases in die Maschine und Bildung eines Gasgemisches aus Inertgas und Wasserstoff,
b) Mittel, um das Gasgemisch aus der Maschine durch den Festkörperspeicher hindurchzusaugen, wobei der Wasserstoff in dem Festkörperspeicher gebunden wird, und zur Ableitung des Inertgases aus dem Festkörperspeicher in die Umgebung.

Die Mittel zum Hindurchsaugen des Gasgemisches durch den Festkörperspeicher und zur Ableitung des Inertgases in die Umgebung umfassen vorzugsweise eine Pumpe, mit der das Inertgas aus dem Festkörperspeicher in die Umgebung abführbar ist.

Die Mittel zur Ableitung des Inertgases in die Umgebung umfassen insbesondere ein äbleitrohrsystem, gegebenenfalls mit einem Absperrventil, sowie einen Kamin; die Mittel zur Einleitung des Inertgases in die Maschine umfassen einen Vorratsspeicher für das Inertgas sowie ein entsprechendes Leitungs- und Ventilsystem.

Vorteilhafterweise ist der Festkörperspeicher ein Absorptionsspeicher, vorzugsweise ein Hydridspeicher.

Günstig ist es, wenn der Festkörperspeicher ein Überdruckventil aufweist, durch welches er an Mittel, insbesondere ein Ableitrohrsystem und einen Kamin, zur Ableitung des Wasserstoffs in die Umgebung anschließbar ist. Ein wesentlicher Vorteil liegt dabei darin, daß insbesondere Rohrsysteme mit relativ kleinen Querschnitten verwendbar sind, welche relativ einfach unter Einbeziehung besonderer Sicherheitsmaßnahmen verlegbar sind, so daß eine Entzündung des aus dem Festkörperspeicher abgeführten Wasserstoffs praktisch ausgeschlossen werden kann. In keinem Fall ist dabei zu besorgen, daß große Wasserstoffflammen mit entsprechender Hitzeentwicklung entstehen.

Die Einrichtung ist günstigerweise versehen mit Mitteln zur Kühlung des Festkörperspeichers, da eine Kühlung die Bindung des Wasserstoffs in dem Festkörperspeicher wesentlich unterstützen kann. Solche Mittel sind je nach Ausgestaltung auch verwendbar, um den Wasserstoff ohne weitere Hilfen, insbesondere ohne Pumpen, aus der Maschine in den Festkörperspeicher hineinzusaugen.

Um den Transport von Wasserstoff in weitgehend beliebiger Weise zwischen der Maschine und dem Festkörperspeicher zu gestatten, ist der Festkörperspeicher günstigerweise mit Mitteln zur Temperierung, insbesondere zur Erwärmung ausgestattet. Damit ist insbesondere ohne die Verwendung von Pumpen, an welchen stets Leckagen möglich sind, ein beliebiger Transport von Wasserstoff zwischen der Maschine und dem Festkörperspeicher möglich.

Die Einrichtung ist besonders geeignet zur Verwendung zur Austragung von Wasserstoff aus einer dynamoelektrischen Großmaschine, insbesondere aus einem Turbogenerator. Dabei kann je nach Anforderungen der Wasserstoff mit einem Durchsatz bis zu etwa 1 Nm³/sec aus der Maschine ausgetragen werden.

Eine weitere vorteilhafte Verwendung der Einrichtung liegt in der Zwischenlagerung des Wasserstoffs während einer Revision der elektrischen Maschine.

Auch ist die Einrichtung geeignet zur Reinigung des in der Maschine befindlichen Wasserstoffs, indem dieser periodisch zumindest teilweise aus der Maschine ausgetragen, in dem Festkörperspeicher gespeichert und wieder in die Maschine zurückgeführt wird. Da ein üblicher Festkörperspeicher ein erhebliches Absorptionsvermögen auch für andere Gase als Wasserstoff, insbesondere für Bestandteile der Luft, aufweist, kann er neben der Speicherfunktion zur Reinigung des Wasserstoffs eingesetzt werden, wobei er Beimischungen aus dem Wasserstoff absorbiert. In der Tat kann mittels des Festkörperspeichers ein Reinheitsgrad des Wasserstoffs erzielt werden, wie er handelsüblich nicht zur Verfügung steht, wobei der Anteil an Beimischungen insbesondere unter 10⁻³ % liegt. Die Reinheit des Wasserstoffs ist besonders wichtig in dynamoelektrischen Großmaschinen, da die Reinheit des Wasserstoffs unmittelbar die Gasreibung der rotierenden Teile in der dynamoelektrischen Maschine bestimmt. Insbesondere durch eine Verbesserung der Reinheit des Wasserstoffs ist bei einem Turbogenerator mit einer Scheinleistung in der Größenordnung von 500 MVA eine Leistungserhöhung von 100 kW und mehr möglich.

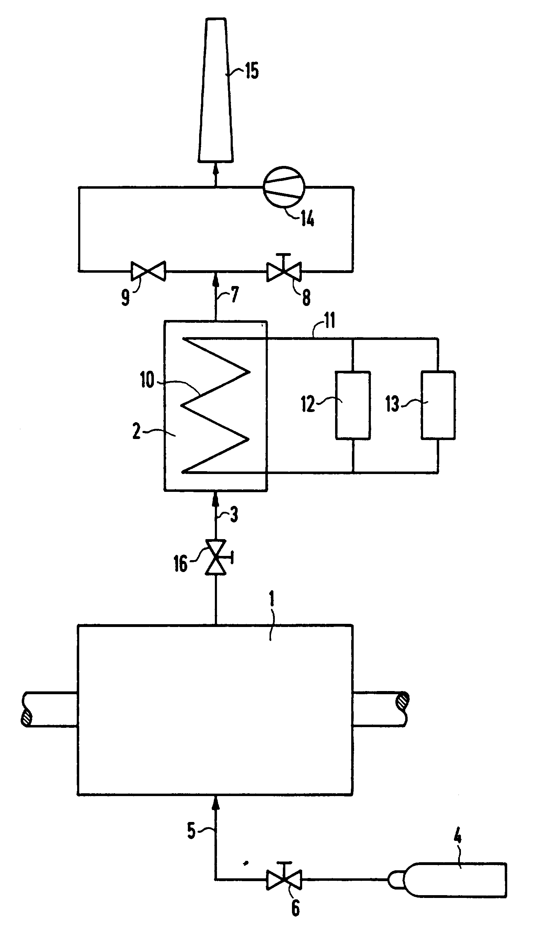

Ein Ausführungsbeispiel der Erfindung ist in der Zeichnung dargestellt. In der einzigen Figur ist eine Anlage gezeigt, in der eine elektrische Maschine 1 über ein Verbindungsrohr 3 an einen Festkörperspeicher 2 geschaltet ist. Der Festkörperspeicher 2 ist vorzugsweise ein Hydridspeicher, welcher eine poröse Matrix aus einem Metall oder einer Metallegierung enthält, die den zugeführten Wasserstoff aufzunehmen vermag. Die Aufnahme von Wasserstoff aus der elektrischen Maschine 1, bzw. die Abgabe von Wasserstoff in die elektrische Maschine 1, ist durch Temperierung des Festkörperspeichers 2 bestimmbar; durch Abkühlung ist in dem Festkörperspeicher 2 ein Vakuum erzeugbar, durch welches Wasserstoff aus der elektrischen Maschine 1 angesaugt werden kann, und durch Erwärmung kann in dem Festkörperspeicher 2 ein Überdruck erzeugt werden, welcher ausnutzbar ist, um Wasserstoff durch das Verbindungsrohr 3 in die elektrische Maschine 1 hineinzudrücken. Zur Temperierung des Festkörperspeichers 2 ist dieser mit einem Wärmetauscher 10 versehen, welcher über ein zugehöriges Verbindungsrohrsystem 11 mit einer Kühlanlage 12, insbesondere einem üblichen Kaltwassernetz, einerseits und einer Heizanlage 13, insbesondere einem üblichen Warmwassernetz, andererseits verbunden ist. Die Ausgestaltung des Wärmetauschers 10, der Kühlanlage 12 und der Heizanlage 13 unterliegt über die einschlägigen anwendbaren Lehren hinaus keinen Beschränkungen; es sei jedoch darauf hingewiesen, daß insbesondere durch entsprechende Auslegung der Kühlanlage 12 ein wirksamer Schutz des Festkörperspeichers 2 gegen Überhitzung realisierbar ist. So kann insbesondere für einen Brandfall vorgesehen werden, daß der Festkörperspeicher 2 durch eine entsprechend ausgelegte Kühlanlage 12 auch unter schweren Bedingungen auf einer relativ niedrigen Temperatur gehalten wird, was dazu führt, daß der Wasserstoff praktisch vollständig in dem Festkörperspeicher 2 gebunden ist. Unter Umständen kann es angebracht sein, eine Möglichkeit zur Abkühlung des Festkörperspeichers 2 mit flüssigem Stickstoff, Kohlensäureschnee oder dgl. vorzusehen. Um die elektrische Maschine 1 ggf. von dem Festkörperspeicher 2 abschotten zu können, ist in dem Verbindungsrohr 3 ein Absperrventil 16 vorgesehen.

Aus einem Vorratsbehälter 4 ist die elektrische Maschine 1 über ein entsprechendes Rohr 5 nebst Stellventil 6 mit einem Inertgas, vorzugsweise Stickstoff, beaufschlagbar. Mit diesem Inertgas kann der Wasserstoff aus der elektrischen Maschine 1 verdrängt und in den Festkörperspeicher 2 eingespült werden. Nach vollständiger Austragung des Wasserstoffs in den Festkörperspeicher 2 kann die elektrische Maschine 1 für Revisionszwecke und dergleichen geöffnet werden.

Die Austragung des Wasserstoffs aus der elektrischen Maschine 1 erfolgt durch Einleiten von Inertgas, wobei es zu einer Vermischung des Inertgases mit dem Wasserstoff kommt. Um den solcherart mit Inertgas gemischten Wasserstoff zu speichern, wird das Gasgemisch durch den Festkörperspeicher 2 hindurchgesaugt, wobei der Wasserstoff gebunden und somit wieder von dem Inertgas getrennt wird. Das Inertgas wird, nachdem es den Festkörperspeicher 2 durchströmt hat, durch ein Ableitrohrsystem 7 einem Kamin 15 zugeführt. Das Ableitrohr 7 ist verzweigt. In einem Zweig befindet sich ein Überdruckventil 9, welches insbesondere dann wichtig ist, wenn durch Erwärmung die Bindung des Wasserstoffs in dem Festkörperspeichers 2 gelöst wird und ein Überdruck entsteht, welcher zur Vermeidung von Beschädigungen begrenzt werden muß. In einem anderen Zweig des Ableitrohrsystems 7 angeordnet ist eine Vakuumpumpe 14, zwischen der und dem Festkörperspeicher 2 sich ein Stellventil 8, insbesondere ein Absperrventil, befindet. Mit der Vakuumpumpe 14 ist bei geöffnetem Stellventil 8 das Inertgas aus dem Festkörperspeicher 2 absaugbar und dem Kamin 15 zuführbar. Die Vakuumpumpe 14 kann auch genutzt werden, um den in die elektrische Maschine 1 eingeleiteten Wasserstoff von evtl. vorhandenen Inertgasresten zu befreien. Hierfür wird das Gasgemisch aus der elektrischen Maschine in den Festkörperspeicher 2 hineingesaugt, sei es durch Abkühlung oder eine weitere, in der Zeichnung nicht dargestellte Pumpe, worauf sich der Wasserstoff aus dem Gasgemisch in dem Festkörperspeicher 2 ablagert und somit von dem Inertgas getrennt wird. Das Inertgas kann über die Vakuumpumpe 14 abgesaugt werden. Eine Möglichkeit zur Reinigung des Gases in der elektrischen Maschine 1 wird realisiert durch Ausnutzung des Absorptionsvermögens des Festkörperspeichers 2 für andere Gase als Wasserstoff, insbesondere für sauerstoffhaltige Gase. Durch periodisches Hin- und Hertransportieren des Wasserstoffs zwischen der elektrischen Maschine 1 und dem Festkörperspeicher 2 werden Verunreinigungen des Wasserstoffs in den Festkörperspeicher 2 eingetragen und dort absorbiert. Auf diese Weise kann eine Reinheit des Wasserstoffs erzielt werden, die weit über die Reinheit des handelsüblich verfügbaren Wasserstoffs, die üblicherweise Beimischungen bis 0,1 % vorsieht, hinausgeht.

Die Erfindung betrifft die Austragung von Wasserstoff aus einer mit Wasserstoff gefüllten elektrischen Maschine, wobei der Wasserstoff aus der gasförmigen Phase in eine Festkörperverbindung überführt wird. Dabei erübrigen sich die bisher notwendigen Einrichtungen zur Führung und Ableitung größerer Mengen gasförmigen Wasserstoffs. Erfindungsgemäß kann somit die Betriebssicherheit in Anlagen mit elektrischen Maschinen, die Wasserstoff enthalten, erheblich gesteigert werden.

## Patentansprüche

1. Verfahren zur Austragung von Wasserstoff aus einer mit Wasserstoff gefüllten elektrischen Maschine (1) und Eintragung des Wasserstoffs in einen Festkörperspeicher (2),
**dadurch gekennzeichnet**, daß
a) ein Inertgas in die Maschine (1) eingeleitet und mit dem Wasserstoff vermischt wird,
b) das sich ergebende Gasgemisch durch den Festkörperspeichei (2) hindurchgesaugt wird, wobei der Wasserstoff in dem Festkörperspeicher (2) gebunden wird, und
c) das Inertgas aus dem Festkörperspeicher (2) getrennt abgeführt wird.

2. Verfahren nach Anspruch 1, bei dem das Inertgas keinen Sauerstoff enthält.

3. Verfahren nach Anspruch 2, bei dem das Inertgas Stickstoff ist.

4. Verfahren nach einem der vorhergehenden Ansprüche, bei dem der Festkörperspeicher (2) für das Eintragen des Wasserstoffs gekühlt wird.

5. Verfahren nach Anspruch 4, bei dem durch die Kühlung in dem Festkörperspeicher (2) ein Unterdruck erzeugt wird, durch den der Wasserstoff aus der Maschine (1) gesaugt wird.

6. Verfahren nach einem der vorhergehenden Ansprüche, bei dem der Wasserstoff in der Maschine (1) weitgehend vollständig durch das Inertgas ersetzt wird.

7. Einrichtung zur Austragung von Wasserstoff aus einer mit Wasserstoff gefüllten elektrischen Maschine (1) und zur Eintragung des Wasserstoffs in einen Festkörperspeicher (2),
**gekennzeichnet durch**
a) Mittel (4, 5, 6) zur Einleitung des Inertgases in die Maschine (1) und Bildung eines Gasgemisches aus Inertgas und Wasserstoff,
b) Mittel (7, 8, 14, 15), um das Gasgemisch aus der Maschine durch den Festkörperspeicher (2) hindurchzusaugen, wobei der Wasserstoff in dem Festkörperspeicher (2) gebunden wird, und zur Ableitung des Inertgases aus dem Festkörperspeicher (2) in die Umgebung.

8. Einrichtung nach Anspruch 7, bei der die Mittel (7, 8, 14, 15) zum Hindurchsaugen des Gasgemisches durch den Festkörperspeicher (2) und zur Ableitung des Inertgases in die Umgebung eine Pumpe (14) umfassen, mit der das Inertgas aus dem Festkörperspeicher (2) in die Umgebung abführbar ist.

9. Einrichtung nach Anspruch 7 oder 8, bei der der Festkörperspeicher (2) ein Absorptionsspeicher, vorzugsweise ein Hydridspeicher, ist.

10. Einrichtung nach einem der Ansprüche 7 bis 9, bei der der Festkörperspeicher (2) ein Überdruckventil (9) aufweist, durch welches er an Mittel (7, 15) zur Ableitung des Wasserstoffs in die Umgebung anschließbar ist.

11. Einrichtung nach einem der Ansprüche 7 bis 10, welche Mittel (10, 11, 12) zur Kühlung des Festkörperspeichers (2) aufweist.

12. Einrichtung nach einem der Ansprüche 7 bis 11, welche Mittel (10, 11, 13) zur Temperierung, insbesondere zur Erwärmung, des Festkörperspeichers (2) aufweist.

13. Verwendung einer Einrichtung nach einem der Ansprüche 7 bis 12 zur Austragung von Wasserstoff aus einer dynamoelektrischen Großmaschine, insbesondere aus einem Turbogenerator.

14. Verwendung nach Anspruch 13, wobei der Wasserstoff mit einem Durchsatz von etwa 1 Nm³/sec ausgetragen wird.

15. Verwendung einer Einrichtung nach einem der Ansprüche 7 bis 12 oder Verwendung nach einem der Ansprüche 13 und 14 zur Zwischenlagerung des Wasserstoffs während einer Revision der elektrischen Maschine (1).

16. Verwendung einer Einrichtung nach einem der Ansprüche 7 bis 12 oder Verwendung nach einem der Ansprüche 13 bis 15 zur Reinigung des Wasserstoffs in der Maschine (1), indem der Wasserstoff periodisch zumindest teilweise aus der Maschine (1) ausgetragen, in dem Festkörperspeicher (2) gespeichert und wieder in die Maschine (1) zurückgeführt wird.

## Claims

1. Method for discharging hydrogen from a hydrogen-filled electrical machine (1) and feeding the hydrogen into a solid-state store (2), characterized in that
a) an inert gas is introduced into the machine (1) and mixed with the hydrogen,
b) the resultant gas mixture is sucked through the solid-state store (2), the hydrogen being bound in the solid-state store (2), and
c) the inert gas is removed separately from the solid-state store (2).

2. Method according to Claim 1, in which the inert gas contains no oxygen.

3. Method according to Claim 2, in which the inert gas is nitrogen.

4. Method according to one of the preceding claims, in which the solid-state store (2) is cooled to feed in the hydrogen.

5. Method according to Claim 4, in which an underpressure by means of which the hydrogen is sucked out of the machine (1) is produced by the cooling in the solid-state store (2).

6. Method according to one of the preceding claims, in which the hydrogen in the machine (1) is replaced substantially completely by the inert gas.

7. Apparatus for discharging hydrogen from a hydrogen-filled electrical machine (1) and for feeding the hydrogen into a solid-state store (2), characterized by
a) means (4, 5, 6) for introducing the inert gas into the machine (1) and for forming a gas mixture composed of inert gas and hydrogen,
b) means (7, 8, 14, 15) for sucking the gas mixture out of the machine through the solid-state store (2), the hydrogen being bound in the solid-state store (2), and for venting the inert gas from the solid-state store (2) into the environment.

8. Apparatus according to Claim 7, in which the means (7, 8, 14, 15) for sucking the gas mixture through the solid-state store (2) and for venting the inert gas into the environment comprise a pump (14) with which the inert gas can be removed from the solid-state store (2) into the environment.

9. Apparatus according to Claim 7 or 8, in which the solid-state store (2) is an absorption store, preferably a hydride store.

10. Apparatus according to one of Claims 7 to 9, in which the solid-state store (2) has an overpressure valve (9) by which it can be connected to means (7, 15) for venting the hydrogen into the environment.

11. Apparatus according to one of Claims 7 to 10, which has means (10, 11, 12) for cooling the solid-state store (2).

12. Apparatus according to one of Claims 7 to 11, which has means (10, 11, 13) for the temperature control, in particular for the heating, of the solid-state store (2).

13. Use of an apparatus according to one of Claims 7 to 12 for the discharge of hydrogen from a dynamoelectric heavy machine, in particular from a turbo generator.

14. Use according to Claim 13, in which the hydrogen is discharged at a flow rate of about 1 normal m³/sec.

15. Use of an apparatus according to one of Claims 7 to 12 or use according to one of Claims 13 and 14 for the interim storage of hydrogen during an inspection of the electrical machine (1).

16. Use of an apparatus according to one of Claims 7 to 12 or use according to one of Claims 13 to 15 for purifying the hydrogen in the machine (1) by periodically discharging the hydrogen at least partially from the machine (1), storing it in the solid-state store (2) and feeding it back into the machine (1) again.

## Revendications

1. Procédé pour retirer de l'hydrogène d'une machine électrique (1) remplie d'hydrogène et introduire l'hydrogène dans un accumulateur (2) formé d'un corps solide, caractérisé en ce que
a) on introduit un gaz inerte dans la machine (1) et on le mélange à l'hydrogène,
b) on aspire le mélange gazeux, qui se forme, à travers l'accumulateur (2) formé d'un corps solide, l'hydrogène se fixant dans l'accumulateur (2) formé d'un corps solide, et
c) on évacue séparément le gaz inerte à partir de l'accumulateur (2) formé d'un corps solide.

2. Procédé selon la revendication 1, selon lequel le gaz inerte ne contient pas d'oxygène.

3. Procédé selon la revendication 2, selon lequel le gaz inerte est de l'azote.

4. Procédé selon l'une des revendications précédentes, selon lequel on refroidit l'accumulateur (2) formé d'un corps solide pour l'introduction de l'hydrogène.

5. Procédé selon la revendication 4, selon lequel sous l'effet du refroidissement, dans l'accumulateur (2) formé d'un corps solide est produite une dépression, au moyen de laquelle l'hydrogène est aspiré hors de la machine (1).

6. Procédé selon l'une des revendications précédentes, selon lequel on remplace quasiment complètement l'hydrogène situé dans la machine (1), par le gaz inerte.

7. Dispositif pour retirer de l'hydrogène d'une machine électrique (1) remplie d'hydrogène et introduire l'hydrogène dans un accumulateur (2) formé d'un corps solide, caractérisé par
a) des moyens (5,6) pour introduire le gaz inerte dans la machine (1) et former un mélange formé de gaz inerte et d'hydrogène,
b) des moyens (7,8,14,15) pour aspirer le mélange hors de la machine à partir de l'accumulateur (2) formé d'un corps solide, l'hydrogène se fixant dans l'accumulateur (2) formé d'un corps solide, et pour évacuer le gaz inerte depuis l'accumulateur (2) formé d'un corps solide dans l'environnement.

8. Dispositif selon la revendication 7, dans lequel les moyens (7,8,14,15) servant à aspirer le mélange gazeux à travers l'accumulateur (2) formé d'un corps solide et à évacuer le gaz inerte dans l'environnement comprennent une pompe (14), avec laquelle le gaz inerte peut être évacué, à partir de l'accumulateur (2) formé d'un corps solide, dans l'environnement.

9. Dispositif selon la revendication 7 ou 8, dans lequel l'accumulateur (2) formé d'un corps solide est un accumulateur à absorption, de préférence un accumulateur à formation d'hydrure.

10. Dispositif selon l'une des revendications 7 à 9, dans lequel l'accumulateur (2) formé d'un corps solide comporte une soupape de surpression (9), au moyen de laquelle l'accumulateur peut être raccordé à des moyens (7,15) pour évacuer l'hydrogène dans l'environnement.

11. Dispositif selon l'une des revendications 7 à 10, qui comporte des moyens (10,11,12) pour refroidir l'accumulateur (2) formé d'un corps solide.

12. Dispositif selon l'une des revendications 7 à 11, qui comporte des moyens (10,11) pour mettre en température, notamment pour chauffer l'accumulateur (2) formé d'un corps solide.

13. Utilisation d'un dispositif selon l'une des revendications 7 à 12 pour retirer de l'hydrogène d'une grosse machine dynamoélectrique, notamment d'un turbocompresseur.

14. Utilisation selon la revendication 13, dans laquelle l'hydrogène est retiré avec un débit d'environ 1 m³ dans les conditions normales/seconde.

15. Utilisation d'un dispositif selon l'une des revendications 7 à 12 ou utilisation selon l'une des revendications 13 et 14 pour le stockage temporaire de l'hydrogène pendant une révision de la machine électrique (1).

16. Utilisation d'un dispositif selon l'une des revendications 7 à 12 ou utilisation selon l'une des revendications 13 à 15 pour purifier l'hydrogène situé dans la machine (1), par le fait qu'on retire périodiquement l'hydrogène, au moins partiellement, à partir de la machine (1), on l'accumule dans l'accumulateur (2) formé d'un corps solide et on le renvoie à la machine (1).
